# EUROPÄISCHE PATENTANMELDUNG

(11) **EP 2 505 935 A1**
(43) Veröffentlichungstag der Anmeldung: **03.10.2012**
(21) Anmeldenummer: 11002542.6
(22) Anmeldetag: 28.03.2011
(51) Int. Cl.: F24J 2/52, F24J 2/04

(54) **Befestigungssystem und Verfahren zum Befestigen flächiger Elemente an einen Körper**

(71) Anmelder: SunStrom GmbH, 01109 Dresden (DE); Jähnig GmbH Felssicherung und Zaunbau, 01738 Dorfhain (DE)
(72) Erfinder: Matthees, Reiner, 01099 Dresden (DE); Caspary, Dirk, 01109 Dresden (DE); Jähnig, Jens, 01738 Dorfhain (DE); Zacharias, Alexander, 01129 Dresden (DE)
(74) Vertreter: Müller - Hoffmann & Partner

(57) **Zusammenfassung**

Die vorliegende Erfindung betrifft ein Befestigungssystem sowie ein Verfahren zum Befestigen flächiger Elemente (5) an einen Körper (1). Das Befestigungssystem umfasst ein Tragelement (2), an dem die flächigen Elemente befestigt werden können, das von dem Körper (1) beabstandet und entlang dem Körper (1) in einer ersten Raumrichtung geführt wird, ein Befestigungselement (4), das geeignet ist, eine Befestigung des Tragelements (2) am Körper (1) zu ermöglichen, ein Verankerungselement (6) zur Verankerung des Tragelements (2) an dem Fundament (7), wobei das Befestigungs- und das Verankerungselement (4, 6) so angeordnet sind, dass die flächigen Elemente (5) entlang einer ersten Fläche (9, 10) des Körper (1) geführt werden.

## Beschreibung

Die vorliegende Erfindung bezieht sich auf ein Befestigungssystem für flächige Elemente zur Befestigung der flächigen Elemente an einen Körper.

In Photovoltaik-Anlagen erfolgt die Wandlung von Licht in elektrischen Strom in größeren Einheiten von Solarzellen, die als Module (gerahmte Einheiten) oder Paneele (ungerahmte Einheiten) bezeichnet werden. Diese Module oder Paneele, nachfolgend als ..PV-Elemente" bezeichnet, werden üblicherweise auf Gestellsystemen in Freifeldanlagen, auf Hausdächern und an Fassaden von Häusern angebracht.

Die Befestigung von PV-Elementen an Fassaden ist dabei mit großem Aufwand verbunden, da die sichere Fixierung an der Hauswand gewährleistet sein muss. Die Befestigung muss dabei insbesondere erforderlichen Sicherheitsstandards genügen. Für die Nachrüstung bestehender Fassaden mit PV-Elementen gibt es bislang keine Lösung, die darauf verzichtet, in die bestehende Fassade einzugreifen. Beispielsweise können die PV-Elemente in einer Einheit mit der Fassade ausgeführt werden (Warmfassaden) oder aber über mechanische Befestigungen, Kleben oder Bonding an darunter liegenden Fassadenteilen befestigt werden. Zur Realisierung einer derartigen Photovoltaik-Anlage müssen somit entweder schon beim Bau der Fassade Elemente verwendet werden, welchen die PV-Elemente beinhalten, oder es muss zu einem späteren Zeitpunkt bautechnisch in die Fassade eingegriffen werden. Beispielsweise werden Bohrungen an der Fassade vorgenommen, um PV-Elemente sicher zu befestigen. Bei herkömmlichen Ausführungen der PV-Elemente direkt auf den Fassadenteilen oder als Einheit mit der Fassade tritt ferner das Problem auf, dass eine unzureichende Hinterlüftung der PV-Elemente auftritt, wodurch der Wirkungsgrad der PV-Elemente verringert wird.

Der vorliegenden Erfindung liegt somit die Aufgabe zugrunde, ein Befestigungssystem für flächige Elemente zur Befestigung der flächigen Elemente an einem Körper bereitzustellen, durch das die vorstehenden Probleme beseitigt werden können. Insbesondere wäre es wünschenswert ein montierfertiges Befestigungssystem bereitzustellen, das ohne baurechtliche Genehmigung für den Einzelfall "von der Stange" gekauft werden kann.

Gemäß der vorliegenden Erfindung wird die Aufgabe durch den Gegenstand der unabhängigen Patentansprüche gelöst. Bevorzugte Ausführungsformen sind Gegenstand der abhängigen Ansprüche.

Die begleitenden Zeichnungen sind für ein besseres Verständnis der Ausführungsformen der Erfindung beigefügt. Die Zeichnungen veranschaulichen die Ausführungsformen der Erfindung und dienen zusammen mit der Beschreibung dazu, die Prinzipien der Erfindung zu erläutern. Weitere Ausführungsformen der Erfindung und viele der zu erzielenden Vorteile sind leicht erkennbar. Die Elemente der Zeichnungen sind nicht notwendigerweise in den richtigen Größenmaßstäben dargestellt. In den beigefügten Zeichnungen bezeichnen dieselben Bezugszeichen ähnliche Elemente.
Figur 1A zeigt eine schematische Querschnittsansicht eines Körpers mit dem erfindungsgemäßen Befestigungssystem sowie befestigte PV-Elemente;
Figur 1B zeigt eine Detailansicht eines beispielhaften Umlenkelements;
Figur 1C zeigt eine schematische Querschnittsansicht eines Körpers mit dem Befestigungssystem sowie befestigten PV-Elementen gemäß einer weiteren Ausführungsform;
Figur 2 zeigt eine schematische Querschnittsansicht eines Körpers mit dem Befestigungssystem gemäß einer Ausführungsform sowie befestigte PV-Elemente;
Figur 3 zeigt eine Ansicht auf einer Vorderseite des Körpers mit dem erfindungsgemäßen Befestigungssystem sowie befestigte PV-Elemente;
Figur 4 zeigt eine Ansicht auf eine Rückseite des Körpers mit dem Befestigungssystem gemäß einer Ausführungsform;
Figuren 5A bis 5C zeigen Details der Befestigung von PV-Elementen an den Tragelementen;
Figur 6A zeigt eine weitere Ausführungsform eines Körpers mit dem erfindungsgemäßen Befestigungssystem;
Figur 6B zeigt Details der Befestigung der PV-Elemente an einem Maschennetz;
Figuren 7A und 7B zeigen Details der Befestigung der Tragelemente an dem Körper;
Figur 8A zeigt einer weitere Ausführungsform des erfindungsgemäßen Befestigungssystems an einem Körper;
Figur 8B zeigt eine Querschnittsansicht eines Flachdaches mit PV-Elementen: und
Figuren 9A und 9B zeigen weitere Ausführungsformen des Befestigungssystems an einem Körper.

In der folgenden detaillierten Beschreibung wird Bezug auf die begleitenden Zeichnungen genommen, die einen Teil der Beschreibung bilden und in denen nur als Veranschaulichung spezielle Ausführungsformen dargestellt werden, in denen die Erfindung ausgeführt werden kann. Dabei beziehen sich Begriffe zur Kennzeichnung von Richtungen wie beispielsweise "oben", "unten", "vorne", "hinten" usw. auf die Orientierung der beschriebenen Figuren. Da die Komponenten der Ausführungsformen der vorliegenden Erfindung in einer Vielzahl von verschiedenen Orientierungen positioniert sein können, dient die Verwendung dieser Begriffe lediglich der Veranschaulichung und ist in keiner Weise einschränkend zu verstehen.

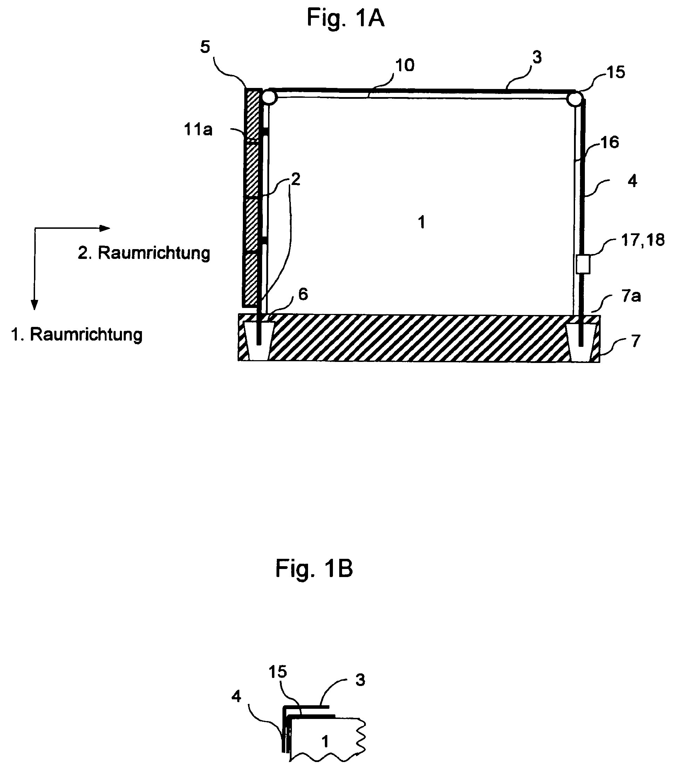

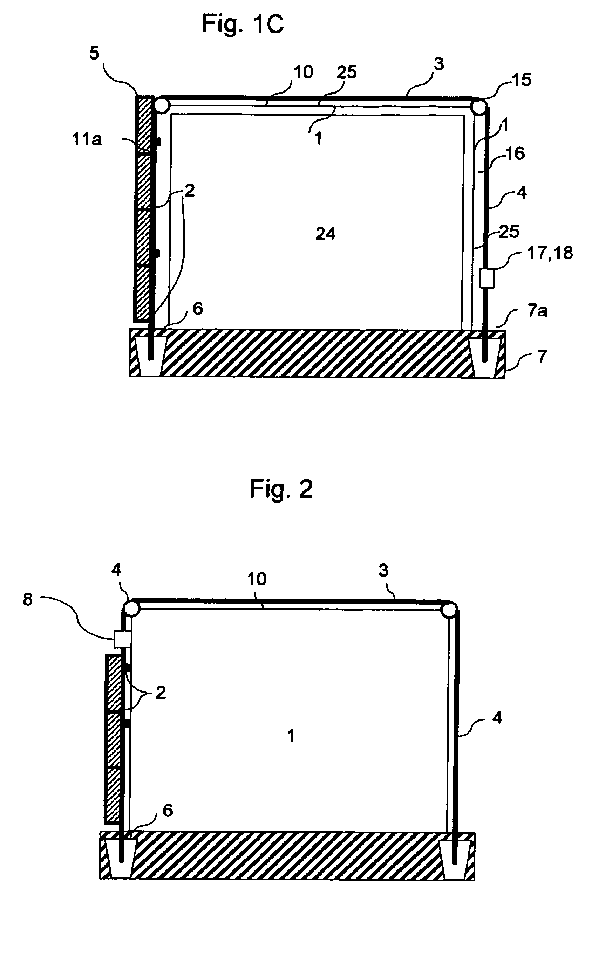

Figur 1A zeigt eine Querschnittsansicht eines Körper 1 mit dem erfindungsgemäßen Befestigungssystem. Der Körper 1 kann ein beliebiges Gebäude, zum Beispiel ein Haus, insbesondere ein Haus mit einem viereckigen Querschnitt in einer Ebene senkrecht zur Bezugsoberfläche 7a oder aber auch ein beliebiger anderer dreidimensionaler Körper sein. Beispielsweise kann der Körper 1 alternativ eine Wand, ein Kasten, ein Aufbau eines Schiffes und ähnliches sein. Unter "Körper" wird im folgenden auch ein Gerüst 25 oder ähnliches verstanden, welches über einen weiteren Körper (inneren Körper) oder Hohlraum gebildet ist. Beispielsweise ist denkbar, dass um den Körper 1 herum und von diesem beabstandet ein Gerüst 25 vorgesehen ist, an dem PV-Elemente 5 angebracht sind. Dabei kann das Gerüst 25 auch um einen Hohlraum gebildet sein und damit einen Körper 1 bilden. Dies ist als Beispiel in Figur 1C veranschaulicht, in der ein Gerüst 25 um einen inneren Körper 24 gebildet ist und somit das Gerüst 25 den Körper 1 bildet. Die Oberseite 10 des Körpers kann horizontal verlaufen, sie kann aber auch einen beliebigen Neigungswinkel zur Bezugsoberfläche 7a haben oder strukturiert sein. Beispielsweise können Aufbauten (nicht gezeigt) auf der Oberseite 10 des Körpers angeordnet sein. Das Fundament 7 kann im Wesentlichen der Erdboden, aus dem der Körper 1 hervorragt, sein. Vorzugsweise ist der Körper 1 in dem Fundament verankert, beispielsweise, indem er teilweise in dem Fundament vergraben ist. Das Fundament kann auch eine beliebige Grundplatte sein, in der der Körper verankert ist, oder beispielsweise das Schiff, wenn der Körper 1 der Aufbau eines Schiffes ist.

Das erfindungsgemäße Befestigungssystem umfasst nun ein Tragelement 2, an dem die flächigen Elemente befestigt werden können, das von dem Körper 1 beabstandet ist und entlang dem Körper 1 in einer ersten Raumrichtung geführt wird. Bei der in Figur 1A gezeigten Anordnung wird das Tragelement 2 entlang der vertikalen Raumrichtung geführt, so dass die flächigen Elemente entlang einer ersten Fläche 9 des Körpers geführt werden. Das Tragelement 2 kann beispielsweise ein Seil, insbesondere ein Drahtseil oder aber auch eine Befestigungsstange sein. Die flächigen Elemente 5 können PV-Elemente, also Solarmodule oder Solarpaneele, aber auch jede andere Art von flächigen Elementen beispielsweise Fassadenelemente zur Verzierung, Leuchtelemente oder ähnliches sein. Das Befestigungssystem umfasst ferner ein Befestigungselement 4 das geeignet ist, eine Befestigung des Tragelements am Körper 1 zu ermöglichen. Beispielsweise kann das Befestigungselement 4 eine Schraube oder ähnliches sein, durch die das Tragelement direkt mit dem Körper 1 verbunden ist. Alternativ kann das Befestigungselement aber auch ein Seil sowie ein oder mehrere Umlenkelemente 15 umfassen. Das Seil ist beispielsweise mit einem Erdanker 6 verbunden und kann über das Umlenkelement 15 über weitere Seiten des Körpers oder entlang der ersten Fläche 9 des Körpers geführt werden. Das Tragelement 2 ist über ein Verankerungselement 6 in dem Fundament 7 verankert. Beispielsweise kann das Verankerungselement 6 ein üblicher Erdanker sein. Gemäß der vorliegenden Erfindung sind nun das Befestigungselement 4 und das Verankerungselement 6 derart angeordnet, dass die flächigen Elemente entlang einer ersten Fläche des Körpers geführt werden. Wie in Figur 1A gezeigt, werden die flächigen Elemente 5 entlang der vertikalen Fläche 9 des Gebäudes 1 geführt.

Gemäß einer bevorzugten Ausführungsform kann das Befestigungselement 4 ferner ein Spannelement 3 umfassen, das mit dem Tragelement 2 verbunden ist, und durch das auf das Tragelement 2 eine Kraftkomponente in eine zweite Raumrichtung ausgeübt wird. Dabei schneidet die zweite Raumrichtung die erste Raumrichtung. Beispielsweise verlaufen die erste und die zweite Raumrichtung senkrecht zueinander. Üblicherweise wird der Verlauf der ersten und der zweiten Raumrichtung durch die Gebäudegeometrie vorgegeben. Dadurch wird das Tragelement 2 entlang der zweiten Raumrichtung fixiert. Bei der in Figur 1A gezeigten Anordnung wird das Spannelement 3 durch ein Stahlseil realisiert, welches über die Umlenkelemente 15 über die Oberseite 10 und die Rückseite 16 des Körpers geführt wird und durch den Erdanker 6 an der Rückseite 16 mit dem Fundament 7 verankert ist. Das Spannelement 3 übt eine Kraftkomponente in die horizontale Richtung aus, so dass die PV-Elemente entlang der Fassade des Gebäudes fixiert werden. Alternativ zu der in Figur 1A gezeigten Anordnung kann das Spannelement 3 auch an anderer Stelle fixiert sein, beispielsweise an der Gebäuderückseite 16 oder and er Gebäudeoberseite 10. Das Umlenkelement 15 kann dabei eine Umlenkwalze oder aber auch - wie in Figur 1B gezeigt - ein Umlenkblech sein. Wichtig ist an dieser Stelle lediglich, dass das Umlenkelement das Spannelement in eine andere Richtung als das Tragelement bzw. einen vorherigen Abschnitt des Spannelements lenkt.

Gemäß einer weiteren Ausführungsform können Teile des Spannelements 3 auch als starre Stange realisiert sein. Dies kann beispielsweise vorteilhaft sein, wenn das Spannelement 3 über eine horizontale Fläche des Körpers 1 geführt wird. In diesem Fall würden, wenn der horizontale Anteil des Spannelements 3 als Seil realisiert wäre, Horizontalkräfte auf die Gebäudehülle einwirken. Wird der horizontale Anteil des Spannelements als starre Stange realisiert, ist es möglich, die wirkenden Horizontalkräfte in reine Vertikalkräfte umzulenken, wodurch Horizontalkräfte auf die Gebäudehülle vermieden werden können.

Figur 1A zeigt somit eine Anordnung, bei der PV-Elemente entlang der Fassade 9 des Gebäudes 1 befestigt werden. Als Abwandlung ist es möglich, die PV-Elemente in einem Winkel zur Hausfassade anzubringen, beispielsweise um einen besseren Wirkungsgrad der Energieumwandlung zu erzielen. Das kann durch entsprechende Ausrichtung der Tragelemente 2 realisiert werden.

Mit diesem Aufbau wird ein Befestigungssystem realisiert, durch das die PV-Elemente sicher an dem Gebäude befestigt werden können, ohne dass es erforderlich ist, Bohrungen an dem Gebäude, insbesondere der Fassade zur Befestigung der PV-Elemente an dem Gebäude vorzusehen, durch die die Fassade geschädigt werden könnte. Weiterhin wird durch diese Art der Befestigung sichergestellt, dass die Solarmodule zuverlässig an dem Gebäude fixiert sind, auch wenn sie beispielsweise starken Umwelteinflüssen ausgesetzt sind. Beispielsweise können durch Wind oder Sturm und andere Wettereinflüsse starke Kräfte verursacht werden, denen das Befestigungssystem standhält. Weiterhin kann durch die besondere Art der Anordnung der PV-Elemente an der Gebäudefassade, bei der die Tragelemente 2 von dem Körper 1 beabstandet geführt werden, ein kleiner Spalt zwischen Solarmodulen und Gebäudefassade vorgesehen werden. Dieser Spalt ist dahingehend vorteilhaft, dass eine Hinterlüftung der PV-Elemente stattfinden kann, wodurch der Wirkungsgrad der PV-Elemente erhöht wird. Weiterhin ist es durch die beschriebene Befestigung der PV-Elemente an den Tragelementen beziehungsweise den Befestigungsgittern 12 oder dem Maschennetz 20 einfacher möglich, defekte PV-Elemente auszutauschen.

Das Befestigungssystem kann ferner eine Nachspanneinrichtung 17 und/oder eine Trennvorrichtung 18 aufweisen. Durch die Nachspanneinrichtung ist es möglich, eine Nachspannung des Spannelements 3 vorzunehmen. Beispielsweise kann im Laufe der Benutzung das Spannelement 3 aufgrund des hohen Gewichts der flächigen Elemente an Spannung verlieren, wodurch die Fixierung der PV-Elemente beeinträchtigt werden kann. Entsprechend kann das Spannelement 3 durch eine derartige Nachspanneinrichtung 17, beispielsweise durch Gewichte oder andere übliche Verfahren nachgespannt werden. Die Trennvorrichtung 18, die gemäß einer Ausführungsform in der Nachspanneinrichtung 17 enthalten sein kann, ermöglicht ein rasches Durchtrennen des Befestigungselement 4, beispielsweise wenn es im Falle eines Brandes notwendig ist, die PV-Elemente von der Hausfassade zu entfernen um ein besseres Löschen des Brandes zu ermöglichen.

Die PV-Elemente können an als Drahtseilen ausgeführten Tragelementen 2 befestigt werden. Alternativ ist es aber auch möglich, die Tragelemente 2 als Stangen vorzusehen. Die Art und Weise, in der die PV-Elemente an den Tragelementen befestigt sind, wird später erläutert werden.

Eine Anordnung, bei der die Tragelemente als Stangen ausgeführt sind, ist in Figur 2 gezeigt. Die Stangen 2 sind auch hier über Verankerungselemente 6 mit dem Fundament verankert. Die Stangen 2 sind über ein Anschlusselement 8 mit einem Befestigungselement 4 verbunden, das beispielsweise wieder durch ein Stahlseil realisiert werden kann. Bei der in Figur 2 gezeigten Anordnung wird das Stahlseil 3 über zwei Umlenkelemente 15 entlang der Oberseite des Gebäudes 1 und der Rückseite des Gebäudes 1 geführt und schließlich über einen Erdanker 6 mit dem Fundament 7 verankert. Bei der in Figur 1A und 2 gezeigten Anordnung entspricht die Rückseite 16 typischerweise der Nordseite des Gebäudes und die Vorderseite 9 üblicherweise der Südseite des Gebäudes.

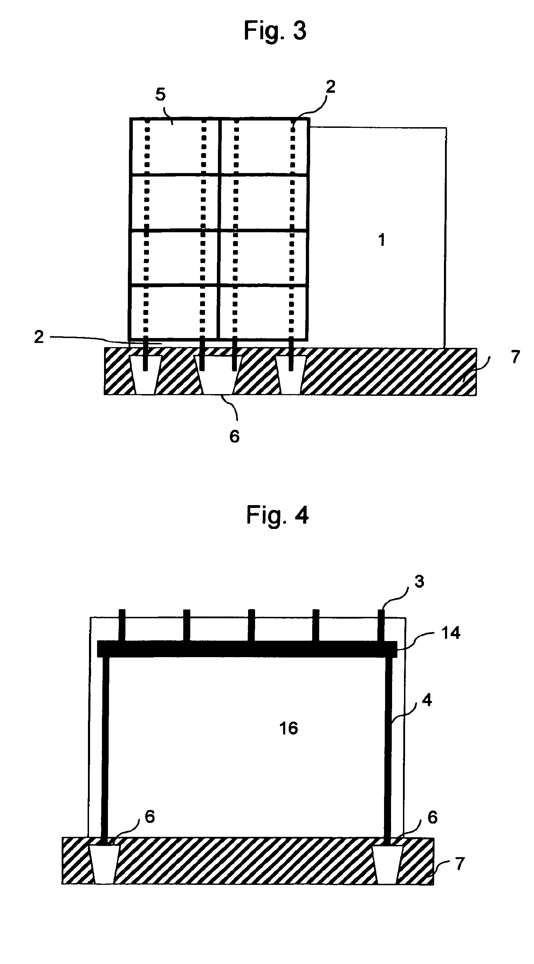

Figur 3 zeigt eine Vorderansicht des Gebäudes. Die PV-Elemente 5 können dicht entlang der Tragelemente 2 angeordnet sein, so dass das Gebäude hinter den Solarmodulen nicht sichtbar ist. Die Erdanker 6 sind entsprechend der lateralen Ausdehnung der PV-Elemente beabstandet angeordnet, um eine Verankerung der Tragelemente sicherzustellen. Der rechtsseitige Teil von Figur 3 zeigt das Gebäude ohne PV-Elemente und der linksseitige Teil zeigt den mit PV-Elemente gedeckten Gebäudeteil. Das System der vorliegenden Erfindung kann in verschiedenen Varianten ausgeführt sein. Beispielsweise muss die Vorderseite nicht ganzflächig mit PV-Elementen ausgefüllt sein, sondern es können - je nach Befestigungsmechanismus an den Tragelementen 2 - Öffnungen für Fenster freigelassen werden.

Weiterhin können, wie in Figur 4 gezeigt ist, mehrere Befestigungselemente oder Spannelemente 3 über ein Verbindungselement 14 verbunden sein und dann über lediglich zwei weitere Befestigungselemente 4 mit einem Erdanker verbunden sein, um eine Vielzahl von Befestigungselementen 4 auf der Gebäuderückseite zu vermeiden. Dadurch ist es möglich eine ansprechendere Erscheinungsform des Gebäudes zu erhalten und zu vermeiden, dass die Befestigungselemente beispielsweise über Fenstern verlaufen. Die PV-Elemente können in vielfältiger Weise mit den Tragelementen 2 verbunden sein.

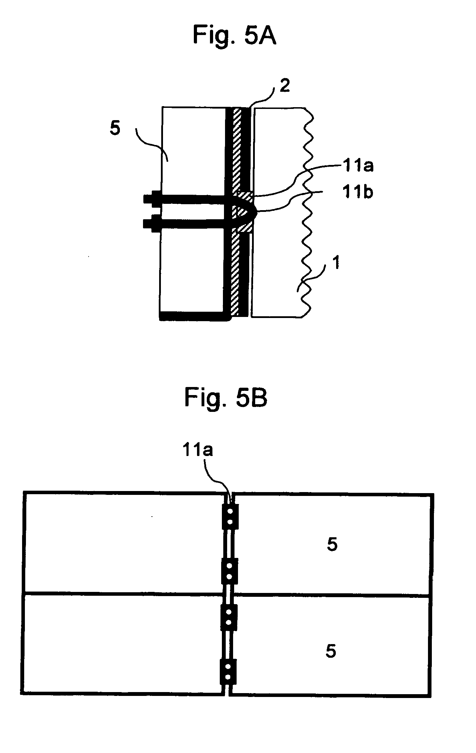

Figur 5A zeigt eine Querschnittsansicht eines an einem Stahlseil montierten Solarmoduls. Beispielsweise können, wenn die Tragelemente als Stahlseile ausgeführt sind, Bügelschellen 11a über Ringösen am Stahlseil befestigt werden. Sodann werden die Solarmodule beispielsweise über Hammerkopfschrauben 11b an den Bügelschellen 11b befestigt. Bei Ausführung der Tragelemente 2 als Stangen kann die Befestigung analog erfolgen.

Figur 5B zeigt eine Draufsicht auf Solarmodule, die an einem Stahlseil oder auch an einer Stahlstange befestigt sind. Weiterhin ist es möglich, die Solarmodule, beispielsweise über Hammerkopfschrauben an einem separaten Gitter zu befestigen und dieses Gitter dann an einem Stahlseil oder aber auch an Stangen zu befestigen.

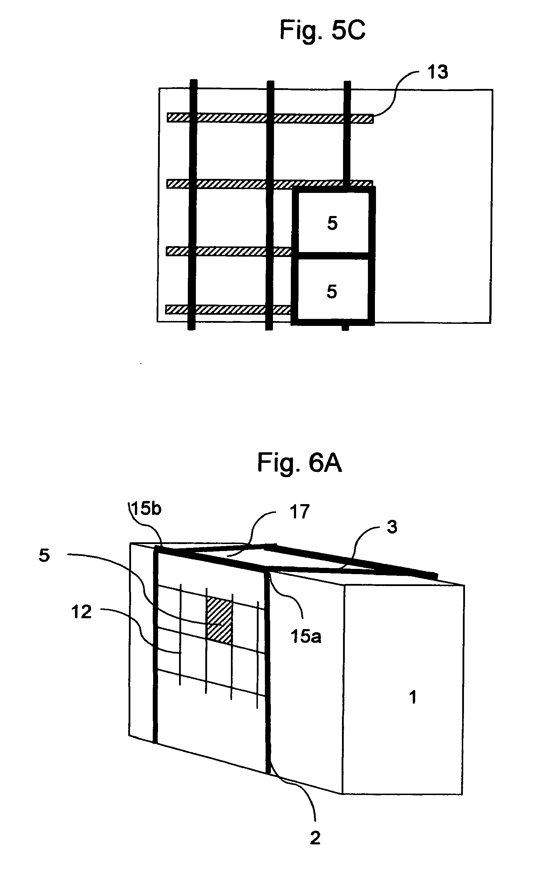

Figur 5C zeigt eine weitere Anordnung, bei der Profile 13, beispielsweise 3-Nut-Profile an Stahlseilen oder Stahlstangen befestigt sind. In diesem Fall ist es möglich, die Solarmodule nach konventionellen Verfahren in die 3-Nut-Profile einzuschieben.

Figur 6A zeigt nun eine weitere Ausführungsform der Erfindung, bei der die Solarmodule auf Befestigungsgittern 12 befestigt sind und über Stahlseile oder Stahlstangen 2 an der Gebäudefassade fixiert sind. Ein Befestigungsgitter kann eine beliebige Anzahl von Längs- oder Querstangen enthalten. Die PV-Elemente 5 können dabei in ähnlicher Weise wie in den Figuren 5A und 5B veranschaulicht befestigt sein. Bei Verwendung eines Befestigungsgitters anstelle der Montage der PV-Elemente über Profile 13 wie in Figur 5C veranschaulicht, ergibt sich der Vorteil, dass eine deutliche Materialersparnis auftritt, was zu einer Reduzierung der Kosten und des Gewichts der zu montierenden Elemente führt. Bei der in Figur 6A gezeigten Anordnung sind die Stahlstangen oder Stahlseile 2 über Erdanker 6 mit dem Fundament verankert. Weiterhin sind Spannelemente 3, beispielsweise Stahlseile vorgesehen, die die Tragelemente 2 an der Gebäudefassade fixieren. Die Spannelemente 3 werden über ein Umlenkelement 15 mit den Tragelementen 2 verbunden. Das Umlenkelement 15 kann beispielsweise ein Dachkantenblech sein, das über eine Fixierstange miteinander fest verbunden ist. Die Spannelemente 3 können über Erdanker mit dem Fundament in der Weise verankert sein, wie in den Figuren 1 bis 3 dargestellt ist. Zusätzlich oder alternativ können sie auch an der Dachoberkante der Rückseite fixiert sein.

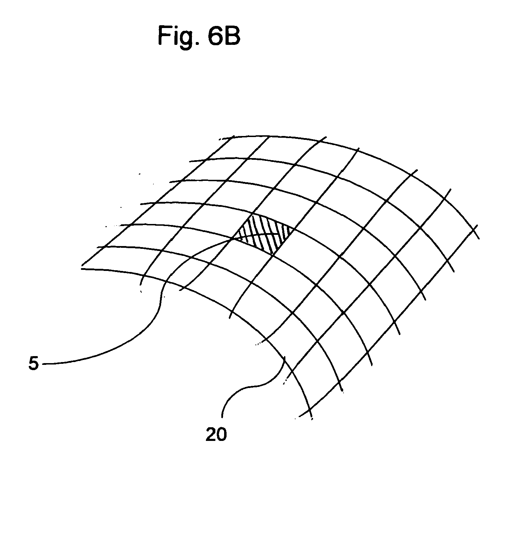

Alternativ zur Befestigung der PV-Elemente an einem Montagegitter 12, das starre Längs- oder Querstangen enthält, können die PV-Elemente 5 auch an einem Maschennetz befestigt werden. Figur 6B zeigt ein Maschennetz 20, welches Maschen aus einem geeigneten Material, beispielsweise Drahtseil aufweist. Die Maschen können beispielsweise eine rechteckige oder aber auch eine beliebige andere Form, beispielsweise Sechseckform aufweisen. Die Größe der Maschen ist vorzugsweise derart bemessen, dass ein PV-Element 5 in eine Masche hineinpasst. Bei Verwendung eines derartigen Maschennetzes ergibt sich der zusätzliche Vorteil, dass die PV-Elemente 5 durch sehr wenig Befestigungsmaterial befestigt werden können. Dadurch ergibt sich eine Materialersparnis, die zu einer Kostenreduzierung und zu einer Gewichtsreduzierung der zu montierenden Elemente führt.

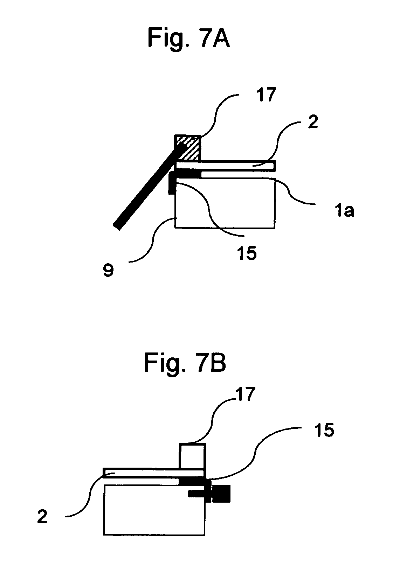

Figur 7A zeigt eine Ausführungsmöglichkeit des Dachkantenblechs. Das Dachkantenblech 15 wird entlang zweier Flächen, beispielsweise entlang der Vorderseite 9 und der Oberseite 10 des Gebäudes 9 geführt. Beispielsweise können zwei Stück Dachkantenblech 15a, 15b, (siehe Figur 6A) an zwei verschiedenen Punkten vorgesehen werden, um jeweils zwei verschiedene Befestigungselemente aufzunehmen. Die beiden Stücke Dachkantenblech können über eine Fixierstange 17 miteinander verbunden sein. Weiterhin können zur Fixierung in vertikaler Richtung die Dachkantenblechstücke über mit dem Fundament verbundenen Stahlseilen 18 fixiert sein. Alternativ können die Dachkantenblechstücke aber auch am Dach festgeschraubt sein, wie in Figur 7B veranschaulicht ist.

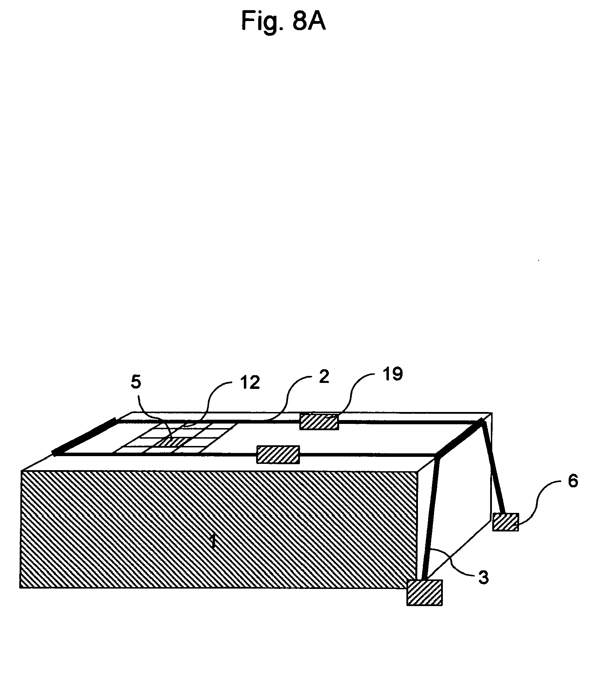

Figur 8A zeigt nun eine Anordnung, bei der die Solarmodule auf dem Gebäudedach angebracht sind. In Figur 7 werden Tragelemente 2 über das Dach geführt. Die Tragelemente können beispielsweise Stahlseile oder Stangen sein. Abschnittsweise können Pflöcke 19 vorgesehen sein, die auf dem Dach aufliegen und gegebenenfalls durch geeignete Dämmmaterialien oder elastische Materialen gegenüber diesem abgepuffert sind. Die Pflöcke 19 verhindern ein Schwingen der Tragelemente. Weiterhin können bei einer derartigen Gestaltung der Tragelemente kürzere Stangen verwendet werden, was ihre praktische Handhabbarkeit vereinfacht. Die Tragelemente 2 erstrecken sich entlang der horizontalen Richtung. Selbstverständlich ist es bei entsprechender Neigung des Gebäudedachs möglich, dass sich die Tragelemente in einer nicht horizontalen Richtung erstrecken. Die Tragelemente 2 sind nun über Spannelemente 3, die über Verankerungselemente 6 mit dem Fundament verbunden sind, auf dem Gebäudedach fixiert. Die Spannelemente 3 üben eine Kraftkomponente in einer Richtung, die die Richtung der Tragelemente schneidet, aus. Entsprechend werden die Tragelemente durch die Spannelemente in vertikaler Richtung fixiert, so dass beispielsweise auch bei starkem Wind verhindert wird, dass die PV-Elemente vom Dach abheben. Weiterhin wird durch die Spannelemente 3 der Aufbau senkrecht zu den Tragelementen fixiert. Das Befestigungselement 4, das im vorliegenden Fall die Dachkantenblechstücke mit der Fixierstange 17 umfasst, verhindert eine Bewegung der Solarmodule parallel zur Längsrichtung der Tragelemente. Beispielsweise kann die Fixierstange über Befestigungsösen an dem Stahlseil 3 befestigt sein.

Bei der in Figur 8A gezeigten Ausführungsform können die PV-Elemente wiederum direkt an den Tragelementen 2 befestigt sein, wie beispielsweise in den Figuren 5A-5C gezeigt ist. Alternativ können die PV-Elemente 5 auf Montagegittern 12 oder aber auch auf Maschennetzen 20 wie in Figur 6B veranschaulicht befestigt sein.

Durch diese Art der Befestigung der PV-Elemente auf der Oberfläche 10 des Gebäudes können die PV-Elemente auf der Oberfläche durch ein Befestigungssystem, bei dem ein Eindringen in die Dachhaut nicht erforderlich ist, fixiert werden, wobei ein Verrutschen der Elemente unter Windlast weitgehend vermieden wird.

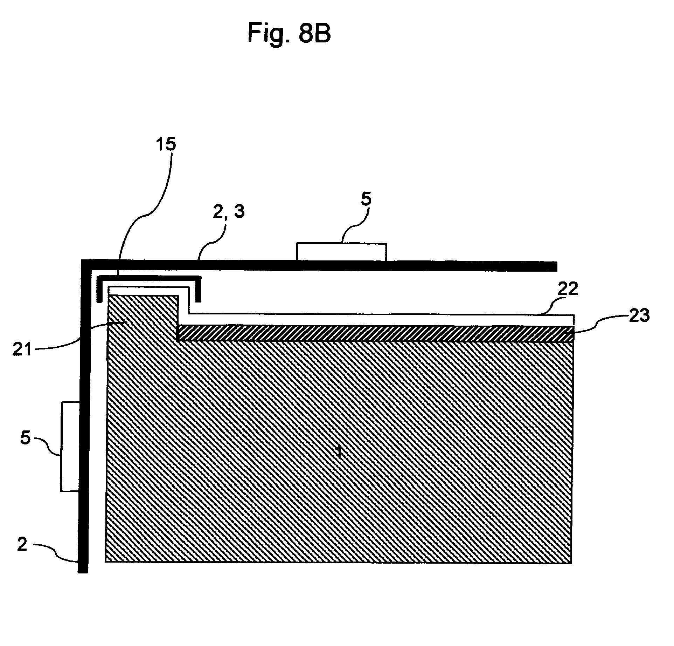

Figur 8B zeigt eine Detailansicht für den Fall, dass PV-Elemente entlang einer Fassade und/oder einem horizontal verlaufenden Dach eines Flachdachhauses befestigt sind. Üblichweise weisen Häuser mit Flachdach eine Attika 21 auf, d.h. einen vertikal nach oben stehenden Bereich am Rand des Flachdaches. Auch wenn der Körper Aufbauten wie beispielsweise eine Attika 21 aufweist, ist eine Befestigung der PV-Elemente 5 durch das erfindungsgemäße Befestigungssystem realisierbar. Üblicherweise ist eine Dämmung 23 direkt auf der horizontalen Fläche des Körpers 1 vorgesehen, gefolgt von einer Dacheindeckung 22, die beispielsweise eine oder mehrere geeignete Folien, Bitumen oder anderes umfassen kann. Üblicherweise ist die Dämmung nur auf dem Gebäudedach, nicht jedoch auf der Attika 21 vorgesehen, die Dacheindeckung 22 überdeckt sowohl die horizontale Gebäudeoberfläche als auch die Attika 21. Ein Dachkantenblech 15 ist über der Dacheindeckung 22 auf der Attika 21 vorgesehen. In diesem Falle werden Tragelement 2 und Spannelement 3 über das Dachkantenblech 15 geführt. Bei der in Figur 8B gezeigten Realisierung, bei der PV-Elemente 5 sowohl an der Fassade als auch auf der Dachoberfläche vorgesehen sind, übernimmt der horizontal verlaufende Bereich des Tragelements 2 zugleich die Funktion des Spannelements 3. PV-Elemente 5 können in der Weise, wie sie vorstehend beschrieben ist, an den Tragelementen 2 befestigt sein.

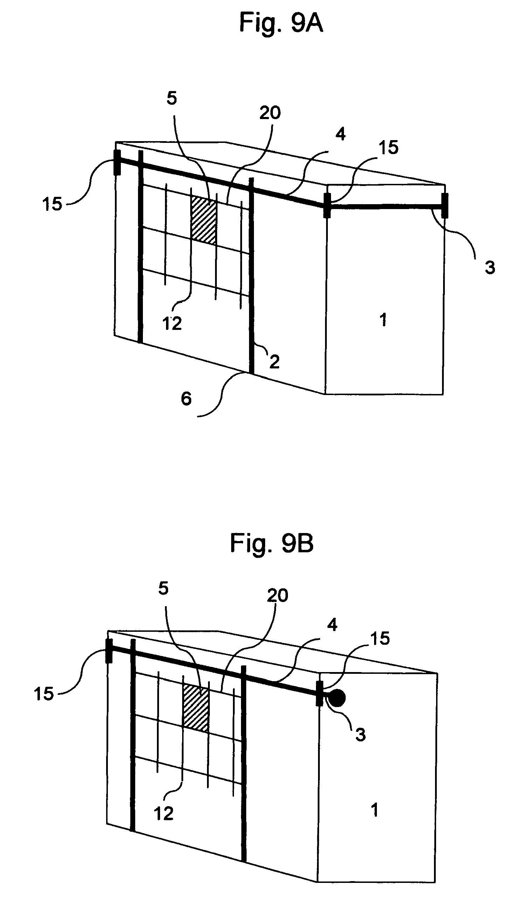

Die Figuren 9A und 9B zeigen alternative Ausführungsformen, bei denen die Solarmodule auf einem Befestigungsgitter 12 oder einem Maschennetz 20 befestigt sind, welches entlang einer Gebäudefassade angebracht ist. Bei den in den Figuren 8A und 8B gezeigten Ausführungsformen sind das Befestigungselement 4 und das Spannelement 3 durch ein um das Gebäude in einer horizontalen Richtung komplett oder teilweise umlaufendes Stahlseil realisiert. Beispielsweise wird in Figur 8A das Stahlseil 3 über Umlenkelemente 15 komplett um das Gebäude 1 herumgeführt und dient somit zu Fixierung der Tragelemente 2, und das Befestigungsgitter 12 ist an den Tragelementen 2 befestigt. Tragelemente 2, die vorzugsweise als Stahlstangen realisiert sind, sind über Verankerungselemente 6 mit dem Fundament 7 in der in Figur 1A bis 3 gezeigten Weise verankert. Alternativ können die Stahlseile 3 aber auch, wie in Figur 8B gezeigt, an einer Seitenfläche des Gebäudes befestigt sein und/oder aber auch über Erdanker (nicht gezeigt) an der Seitenfläche des Gebäudes 1 mit dem Fundament verankert sein.

Die vorliegende Erfindung betrifft auch ein Verfahren zum Befestigen flächiger Elemente 5 an einem Körper 1 , mit den Schritten Verankern eines Tragelements 2 an einem Fundament 7, Befestigen des Tragelements 2 an dem Körper 1, wobei das Tragelement 2 von dem Körper 1 beabstandet und entlang dem Körper 1 in einer ersten Raumrichtung geführt wird und Anbringen der flächigen Elemente 5 an dem Tragelement 2. Dabei können je nach Ausführung von Tragelement und flächigem Element die vorstehenden Schritte in beliebiger Reihenfolge ausgeführt werden.

### Bezugszeichenliste

- 1: Körper (Gebäude)
- 2: Tragelement (Seil, Stange)
- 3: Spannelement
- 4: Befestigungselement
- 5: flächige Elemente
- 6: Verankerungselement
- 7: Fundament
- 8: Anschlusselement
- 9: Vorderseite des Körpers
- 10: Oberseite
- 11a: Schelle
- 11b: Hammerkopfschraube
- 12: Montagegitter
- 13: 3-Nut-Profil
- 14: Verbindungselement
- 15a, 15b: Umlenkelement
- 16: Rückseite
- 17: Fixierstange
- 18: Seil
- 19: Betonpflock
- 20: Maschennetz
- 21: Attika
- 22: Dacheindeckung
- 23: Dämmung
- 24: innerer Körper
- 25: Gerüst

## Patentansprüche

1. Befestigungssystem für flächige Elemente zur Befestigung der flächigen Elemente (5) an einen Körper (1), mit
- einem Tragelement (2), an dem die flächigen Elemente befestigt werden können, das von dem Körper (1) beabstandet und entlang dem Körper (1) in einer ersten Raumrichtung geführt wird,
- einem Befestigungselement (4), das geeignet ist, eine Befestigung des Tragelements (2) am Körper (1) zu ermöglichen,
- einem Verankerungselement (6) zur Verankerung des Tragelements (2) an einem Fundament (7), wobei
das Befestigungs- und das Verankerungselement (4, 6) so angeordnet sind, dass die flächigen Elemente (5) entlang einer ersten Fläche (9, 10) des Körper (1) geführt werden.

2. Befestigungssystem nach Anspruch 1, wobei das Befestigungselement (4) ein mit dem Tragelement (2) verbundenes Spannelement (3) umfasst, durch das auf das Tragelement (2) eine Kraftkomponente in eine zweite Raumrichtung, welche die erste Raumrichtung schneidet, ausgeübt wird, so dass das Tragelement (2) entlang der zweiten Raumrichtung fixiert wird.

3. Befestigungssystem nach Anspruch 2, wobei das Spannelement (3) ein Seil, das über mindestens eine zweite Fläche (10) des Körpers (1) geführt wird, sowie ein Umlenkelement (15) umfasst.

4. Befestigungssystem nach Anspruch 3, wobei das Seil verankert ist.

5. Befestigungssystem nach Anspruch 4, wobei die erste Fläche (9) des Körpers an das Fundament (7) angrenzt und das Spannelement (3) weiterhin über eine dritte Fläche (16) des Körpers geführt wird.

6. Befestigungssystem nach Anspruch 2, wobei das Spannelement (3) eine Stange umfasst, die über mindestens eine zweite Fläche (10) des Körpers (1), welche eine horizontale Komponente aufweist, geführt wird, sowie ein Umlenkelement (15) umfasst.

7. Befestigungssystem nach einem der vorhergehenden Ansprüche, bei dem die flächigen Elemente direkt auf dem Tragelement befestigt sind.

8. Befestigungssystem nach einem der Ansprüche 1 bis 6, bei dem die flächigen Elemente auf einem Montagegitter (12) befestigt sind und das Montagegitter an dem Tragelement (2) befestigt ist.

9. Befestigungssystem nach einem der Ansprüche 1 bis 6, bei dem die flächigen Elemente auf einem Maschennetz (20) befestigt sind und das Maschennetz (20) an dem Tragelement (2) befestigt ist.

10. Befestigungssystem nach einem der Ansprüche 2 bis 9, ferner mit einer an dem Spannelement (3) angebrachten Nachspannvorrichtung (17) zum Nachspannen des Spannelements (3).

11. Befestigungssystem nach einem der Ansprüche 1 bis 10, ferner mit einer an dem Befestigungselement (4) angebrachten Trennvorrichtung (18), durch die die Befestigung des Tragelements (2) am Körper (1) unterbrochen werden kann.

12. Hausfassade mit einem Befestigungssystem nach einem der Ansprüche 1 bis 11, wobei das Haus der Körper (1) ist.

13. Hausdach mit einem Befestigungssystem nach einem der Ansprüche 1 bis 11, wobei das Haus der Körper (1) ist.

14. Photovoltaikanlage mit Photovoltaikelementen (5), bei der die Photovoltaikelemente (5) durch das Befestigungssystem nach einem der Ansprüche 1 bis 11 an einem Körper befestigt sind.

15. Verfahren zum Befestigen flächiger Elemente (5) an einen Körper (1), mit den Schritten:
- Verankern eines Tragelements (2) an einem Fundament (7);
- Befestigen des Tragelements (2) an dem Körper (1), wobei das Tragelement (2) von dem Körper beabstandet und entlang dem Körper (1) in einer ersten Raumrichtung geführt wird; und
- Anbringen der flächigen Elemente (5) an dem Tragelement (2).
